# EUROPEAN PATENT SPECIFICATION

(11) **EP 3 173 306 B1**
(45) Date of publication and mention of the grant of the patent: **30.10.2019**
(21) Application number: 15465561.7
(22) Date of filing: 27.11.2015
(51) Int. Cl.: B60W 40/06, B60W 30/14, B60W 30/09, B60W 30/10, B60W 10/22, B60R 16/023

(54) **METHOD AND DEVICE FOR DETERMINING A TYPE OF THE ROAD ON WHICH A VEHICLE IS DRIVING**
VERFAHREN UND VORRICHTUNG ZUR BESTIMMUNG EINER STRASSENART, AUF DER EIN KRAFTFAHRZEUG FÄHRT
PROCÉDÉ ET DISPOSITIF POUR DÉTERMINER UN TYPE DE ROUTE SUR LAQUELLE UN VÉHICULE ROULE

(43) Date of publication of application: 31.05.2017
(73) Proprietor: Continental Automotive GmbH, 30165 Hannover (DE)
(72) Inventor: Son, Andrei, 300588 Timisoara (RO)
(74) Representative: Reuter, Andreas

(56) References cited:
- EP-A1- 2 524 848
- EP-A2- 0 412 791
- WO-A1-2012/120076
- DE-A1-102010 049 351
- DE-A1-102011 080 932
- KENSUKE HAYASHI ET AL: "Road type estimation by wavelet analysis of running tire sound", WAVELET ANALYSIS AND PATTERN RECOGNITION, 2008. ICWAPR '08. INTERNATIONAL CONFERENCE ON, IEEE, PISCATAWAY, NJ, USA, 30 August 2008 (2008-08-30), pages 650-653, XP031329390, ISBN: 978-1-4244-2238-8
- JACQUELINE LIBBY ET AL: "Using sound to classify vehicle-terrain interactions in outdoor environments", ROBOTICS AND AUTOMATION (ICRA), 2012 IEEE INTERNATIONAL CONFERENCE ON, IEEE, 14 May 2012 (2012-05-14), pages 3559-3566, XP032451088, DOI: 10.1109/ICRA.2012.6225357 ISBN: 978-1-4673-1403-9

## Description

The invention relates to a method and a device for determining a type of the road on which a vehicle is driving, wherein the vehicle can e.g. be a car, a truck or a motorbike. The determined type of the road can be used for creating an environmental model of the vehicle, wherein the created model can be used for an Advanced Driver Assistance System (ADAS).

Known environmental models in ADAS currently provide data based on fused objects detected e.g. by camera, radar or laser Electrical Control Units (ECUs). Detections involved in said known environmental models are limited to objects that can be seen or that can reflect radar or laser beams.

There are elements which effect driving of the vehicle, which are in particular relevant for automated driving and which possibly are not detected with a precision of a camera, radar or laser sensor. For example, potholes can be small enough to be not detected. The same can apply for uneven road surfaces from noisy materials. Further, completely damaged roads could appear as a continuous surface of potholes.

EP 0412791 A2 discloses a system predicting the coefficient of friction µ between a vehicle and the road surface over which the vehicle is travelling. Sensors are provided which generate data on the condition of the road surface, the vehicle, and the ambient conditions. Each sensor has a low-level processor which generates an estimate of µ in some cases by analysing the data from other sensors. The intermediate-level processors then combine the low-level processed data to generate the estimates of µ based on the road surface, the vehicle and the ambient conditions. These three values are combined in a high-level processor to generate a value of µ for the vehicle and signals for suitably modifying the performance of e.g. the braking system.

Hayashi et al. disclose a "Road Type estimation by wavelet Analysis of running tire sound" in Proceedings of the 2008 Int. Conference on Wavelet Analysis and Pattern Recognition, HongKong, pages 650-653, using a microphone installed in the tire.

Libby et al. disclose "Using sound to classify vehicle-terrain interactions in outdoor environments" in 2012 IEEE International Conference on Robotics and Automation, Minnesota, pages 3559 to 3566.

EP 2524848 A1 shows a method to estimate the condition of a road surface on which a vehicle is traveling, using a tire having a general variable-pitch tire pattern for detection of a road surface condition. The vibrations of the tire are detected by an acceleration sensor and are subjected to a rotational order ratio analysis by a rotational order ratio analyzing unit.

Thus, it is an object of the present invention to provide a method and a device for determining a type of the road on which a vehicle is driving, which provide information by use of which an environmental model can describe the environment of the vehicle with high accuracy.

The problem is solved by the subject matter according to the independent claims. The dependent claims, the following description and the drawing show preferred embodiments of the invention.

According to one aspect of the invention a method is provided which enables to determine a type of the road on which a vehicle is driving. The "type" of the road refers to the type of a road surface or the type of an upper most layer of the road and the quality of the road respectively the road surface. The type of the road surface can be gravel, asphalt, rough tarmac, concrete, cobblestones, sand or other noisy materials. With regards to its quality the road can be clear respectively neat, bumpy, badly repaired or completely damaged. Further, the road can comprise potholes or an uneven road surface.

As one basis for determining the type of the road a sound or sounds of a wheel or wheels of the vehicle is sensed respectively are sensed, while the at least one wheel is rolling on the road. The sensing of the at least one sound is done by means of a microphone. The microphone is preferably arranged on the outside of the car, especially in the area of the at least one wheel respectively a tire of the wheel, such that the rolling sound of the wheel respectively the tire on the road can be sensed. In this context "sensing" can include capturing, in particular recording, and processing, e.g. digitalizing and transmitting, of the at least one captured sound. This step provides input data representing a particular sound of a particular type of road.

Additionally - as another basis for determining the type of the road - a vertical acceleration of the vehicle or parts of it is sensed by means of a vertical acceleration sensor or a suspension of the vehicle is sensed by means of a suspension sensor. This step provides input data regarding vibrations or shocks, quick ups and downs in the road etc.

The "vertical acceleration" of the vehicle can e.g. be a relative acceleration of a wheel of the vehicle which can be sensed by a temporal variation of the distance between a chassis of the vehicle and the wheel, wherein the chassis particularly supports the drive, the body and the payload of the vehicle.

A body work of a vehicle in particular comprises springs, dampers, wheels and tyres and connects the chassis to the road surface via the wheels respectively tyres. The "suspension" can e.g. be the temporal change of length or compression of at least one of the springs of the body work which can be sensed by the suspension sensor.

If for example the vehicle is driving on an almost plane surface, e.g. an asphalt road with a clear respectively neat road surface, almost no or just marginal vibrations will be exposed to the wheels. As one result, there probably will be no or just a small suspension of the springs because the springs and dampers do not have to compensate for a shock but just have to compensate for marginal vibrations. As another result, there probably will be almost no relative acceleration between the chassis and the wheels. In this example, the microphone probably records almost uniform sounds with only small peaks.

But, if according to another example the vehicle is driving on a road with potholes, shocks probably will be exposed to at least one of the wheels, while the wheel is rolling into one of the potholes and while the wheel is rolling out of the pothole again. As one result, the springs will be compressed and decompressed respectively there will be a suspension of the springs because the springs and dampers have to compensate for the shock. Such a suspension can be sensed by the suspension sensor. As another result, there probably will be a relative acceleration between the chassis and the at least one wheel which can be sensed by the relative acceleration sensor. In this example, the microphone probably records noise peaks while the wheel is rolling into the pothole and while the wheel is rolling out of the pothole again.

The relative acceleration sensor can be e.g. a known gyro sensor. The suspension sensor can e.g. be a known compression sensor for springs.

On the basis of the sensed sound and/or the sensed acceleration or the sensed suspension the type of the road is determined, e.g. by means of a suitable control unit. Determining the type of the road can e.g. be realized by comparing the data representing the sensed sound and/or data representing the sensed acceleration or suspension with data representing sound profiles and/or relative acceleration respectively suspension profiles according to a specific type of a road, wherein according data can be e.g. stored in a database. The determined type of the route can serve as a particularly suitable input for an environmental model of the vehicle in an ADAS which helps to describe the environment of the vehicle particularly realistic. The method can be implemented with low costs and low efforts and can use existing technology. Preferably, the environmental model created by the method according to the present invention is used in an Advanced Driver Assistance System (ADAS).

Preferably the determined type of the road is used as a basis for creating an environmental model of the vehicle which is driving on the road. In this regard, according to an embodiment of the invention the method can comprise a detection of fused objects in the environment of the vehicle and a detection of a condition of the road on which the vehicle is driving by means of a camera, a radar sensor and/or a laser sensor. In this context the "condition" of the road particularly refers to the condition of the road surface respectively whether there is an additional layer on the road surface. For example the road surface can be dry, wet or at least partially coated with ice, oil or another layer. This method step provides by means of a - so to say - traditional environmental model the detection respectively determination of fused objects and the road condition.

The environmental model can be created by means of the detected fused objects, the detected condition of the road and the determined type of the road. The created environmental model can take into account data of the microphone, the relative acceleration sensor or the suspension sensor in addition to data of a camera, a radar sensor and/or a laser sensor. Thus, the environmental model created by the method according to the present invention can describe the real world respectively the actual environment of the vehicle with very high accuracy and is allowing other systems to take decisions with more information available.

According to an embodiment the creation of the environmental model is additionally based on a detection of road boundaries. For example, the method according to the present invention can be used in combination with a road boundaries detection algorithm that expects to detect roads without lanes, e.g. country roads. This enables to give a comprehensive input to automated driving systems for non-highway roads.

According to another embodiment the determined type of the road supports a safety function in an ADAS. For example, the determined type of the road can be used by safety functions like Emergency Brake Assist (EBA), Emergency Steer Assist (ESA), Lane Departure Warning (LDW), Lane Keeping Assist (LKA) or Adaptive Cruise Control (ACC) to better adjust the parameters defining automated actions depending on the road surface and a degree of damage of the road as according to the detected respectively determined condition and type of the road on which the vehicle is driving.

According to another embodiment the determined type of the road supports a comfort or interior function in an ADAS. For example an Electrical Control Unit (ECU) can control a controllable suspension system of the car in a way that suspension is adapted depending on a specific determined type of the road and, thus, increase the comfort of the passengers of the car. Further, such an adapted suspension enables to reduce noise and can lead to more tranquillity inside the vehicle. Therefore, this embodiment enables to improve the quality and comfort of driving or automated driving by reducing noise created by the running respectively driving car on the particular type of road respectively road surface, and reducing shocks and vibrations of the road.

Further, the determined type of the road can be used in an ADAS, wherein the ADAS controls the speed of the vehicle depending on the detected type of the road. This can improve the safety of the car and further can contribute to a prolonging of a maintenance period of the vehicle by protecting the suspension and steering systems of the vehicle by reducing e.g. the speed if a damaged road is detected.

According to another aspect of the invention a device is provided which is adapted for determining a type of the road on which a vehicle is driving. The device comprises a microphone for sensing a sound of a wheel of the vehicle rolling on the road and/or a vertical acceleration sensor for sensing a vertical acceleration of the vehicle or a suspension sensor for sensing a suspension of the vehicle, wherein the device is adapted for determining the type of the road on the basis of the sensed sound and/or the sensed acceleration or the sensed suspension.

According to an embodiment the device is also adapted for creating an environmental model of the vehicle which is driving on the road. According to this embodiment, the device further comprises a camera, a radar sensor and/or a laser sensor for detecting fused objects in the environment of the vehicle and a condition of the road on which the vehicle is driving. The device can be adapted for creating the environmental model by means of the detected fused objects, condition of the road and the determined type of the road.

Regarding effects, advantages and beneficial embodiments of the device it is referred to the above explanations regarding the method according to the present invention, wherein the device can be adapted - if necessary with additional suitable elements - to carry out above described embodiments of the method according to the present invention.

In the following description exemplary embodiments of the invention are explained with reference to the accompanying drawing in which
- Fig. 1: shows a diagrammatic side view of a vehicle equipped with a device in accordance with an embodiment of the invention,
- Fig. 2: shows a flow chart of a method in accordance with an embodiment of the invention and
- Fig. 3: shows a scheme for creating an environmental model in accordance with an embodiment of the invention.

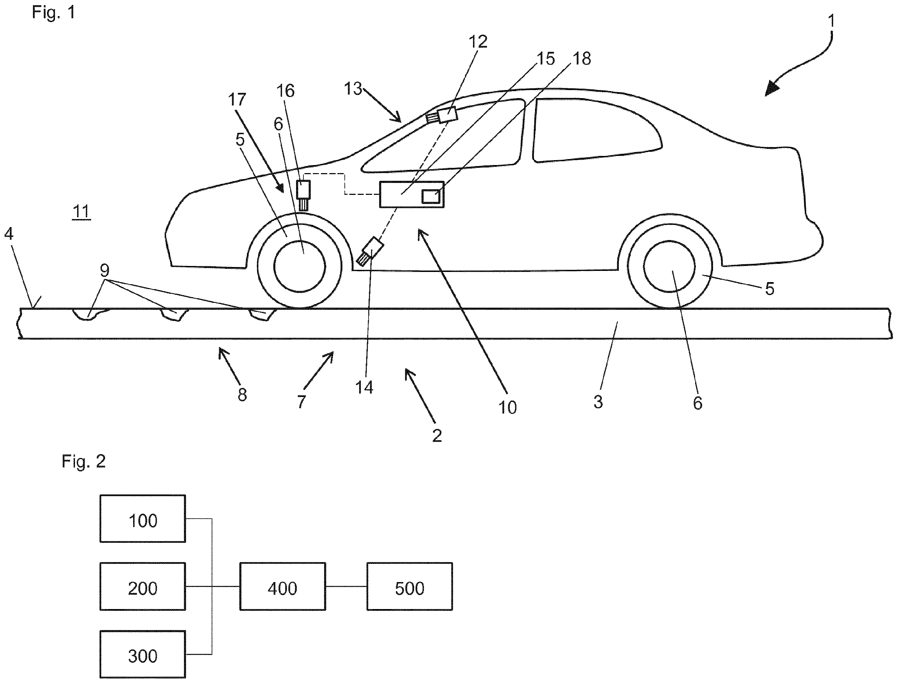

Fig. 1 shows a vehicle in form of a car 1 which is driving on a road 2. An upper layer 3 of the road 2 is made of asphalt and, thus, provides an asphalt road surface 4 (type of the road surface) on which the car 1 is driving by means of its four tyres 5 of its four wheels 6. In a first part 7 of the road 2 which is shown on the right in Fig. 1 the road surface 4 is plane (quality of the first part 7 of the road surface 4), whereas in a second part 8 of the road 2 which is shown on the left in Fig. 1 the road 2 comprises three potholes 9 (quality of the second part 7 of the road 2). Therefore, the type of the first part 7 of the road 2 can be described as an asphalt road with an almost plane road surface and the type of the second part 8 of the road 2 can be described as an asphalt road comprising potholes 9.

The car 1 comprises a device 10 for determining the type of the road 2 on which the car 1 is driving and for creating a model of an environment 11 of the car 1 which is driving on the road 2. The device 10 comprises an ADAS camera 12 which is situated behind a windshield 13 of the car 1. In a known manner the camera 12 detects fused objects in the environment 11 of the car 1 and a condition of the road 1 on which the car 1 is driving, in this example the camera 12 detects that the road 2 is dry and not coated with ice or something else. This is a first step 100 of the method which is illustrated by Fig. 2.

The device 10 further comprises a microphone 14 which is arranged on the outside of the car 1 nearby the left front wheel 6, such that rolling sounds of the wheel 6 while driving on the road 2 are sensed. Although the microphone 14 senses sounds in the shown embodiment, the sensing of only one sound would be sufficient for determining the type of the road 2 and for creating the environmental model. The microphone 14 is a digital microphone that records sounds and transmits digital data representing the recorded sounds to a control unit 15, e.g. an Electrical Control Unit (ECU), of the device 10 which is indicated by a dashed line between the microphone 14 and the control unit 15. In the shown exemplary embodiment the control unit 15 is part of an ADAS. The described sound recording is a second step 200 of the method which is illustrated by Fig. 2, wherein the second step 200 runs parallel to the first step 100, meaning that the first step 100 and the second step 200 can be executed at the same time.

The device 10 also comprises a vertical acceleration sensor 16 which senses relative vertical accelerations of the car 1. Although the acceleration sensor 16 senses relative vertical accelerations in the shown embodiment, the sensing of only one relative vertical acceleration would be sufficient for determining the type of the road 2 and for creating the environmental model. The vertical acceleration sensor 16 is a digital sensor that transmits digital data representing the sensed relative vertical accelerations to the control unit 15 of the device 10, which is indicated by a dashed line between the vertical acceleration sensor 16 and the control unit 15. In the shown example, the vertical acceleration sensor 16 is arranged at a chassis 17 of the car 1 and senses a relative acceleration of the chassis 17 with respect to the left front wheel 6 of the car 1. This is a third step 300 of the method which is illustrated by Fig. 2, wherein the third step 300 runs parallel to the first step 100 and the second step 200, meaning that the first step 100, the second step 200 and the third step 300 can be executed at the same time.

The control unit 15 determines the type of the road 2 on the basis of the data representing the recorded sounds and the data representing the sensed acceleration. This is a fourth step 400 of the method which is illustrated by Fig. 2, wherein the fourth step 400 follows the first three steps 100 to 300. In the shown example, the control unit 15 compares the received data representing the recorded sounds and the received data representing the sensed acceleration with data representing sound profiles and relative acceleration profiles according to specific road types which are stored in a database 18 in a memory unit of the control unit 15. If the received data match with one of the stored data, then the control unit 15 determines that a road type according to the matched data is given.

In the shown example the car 1 is driving on the first part 7 of the road 2, wherein almost no or just marginal vibrations will be exposed to the wheels 6. As a result, a relative acceleration between the chassis 17 of the car 1 and the left front wheel 6 is almost zero. The acceleration sensor 16 senses this and transmits respective data to the control unit 15. Further, the microphone 14 records almost uniform sounds with only small peaks and transmits respective data to the control unit 15. Also, the camera 12 detects the condition of the road 2 on which the car 1 is driving, in this example that the road 2 is dry and not coated with ice or something else. Respective data is transmitted from the camera 12, the microphone 14 and the acceleration sensor 16 to the control unit 15 where it is compared with the stored data representing sound profiles and relative acceleration profiles according to specific road types. The control unit 15 determines that the received data match with stored data representing an asphalt road with an almost plane road surface.

If the car 1 shown by Fig. 1 is driving on the second part 8 of the road 2, shocks are exposed to the wheels 6, e.g. while the wheels 6 are rolling into the potholes 9 and while the wheels 6 are rolling out of the potholes 9 again. As a result, a relative acceleration between the chassis 17 of the car and the front left wheel 6 occurs which is sensed by the acceleration sensor 16 which transmits respective data to the control unit 15. Further, the microphone 14 records noise peaks while the wheels 6 are rolling into the potholes 9 and while the wheels 6 are rolling out of the potholes 9 again and the microphone 14 transmits respective data to the control unit 15. Also, the camera 12 detects the condition of the road 2 on which the car 1 is driving, in this example that the road 2 is dry and not coated with ice or something else. Respective data is transmitted from the camera 12, the microphone 14 and the acceleration sensor 16 to the control unit 15 where it is compared with the stored data representing sound profiles and relative acceleration profiles according to specific road types. The control unit 15 determines that the received data match with stored data representing an asphalt road which comprises potholes 9.

In a subsequent fifth step 500 of the method which is illustrated by Fig. 2, e.g. the control unit 15 creates the environmental model by means of the detected fused objects, condition of the road 2 and type of the road 2.

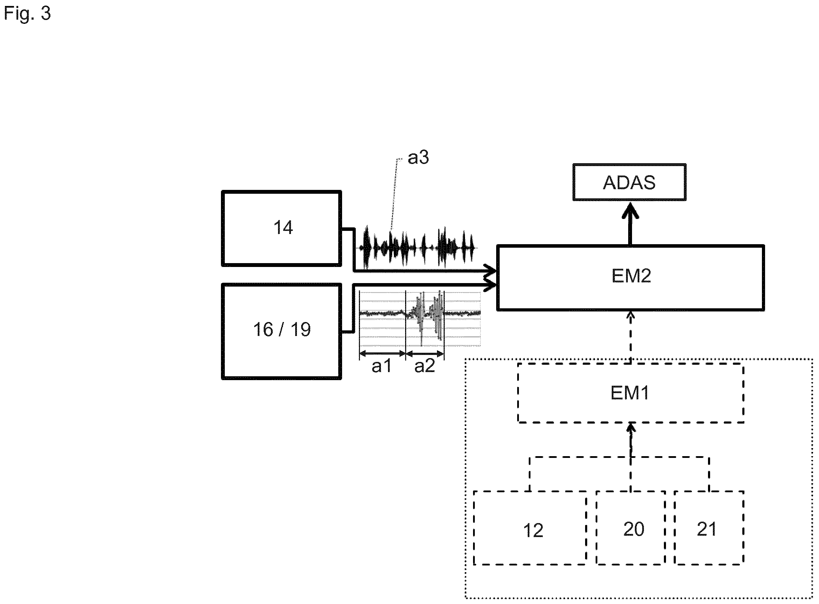

Fig. 3 shows in a generalized way an example of a creation of an environmental model of a vehicle which is driving on a road, e.g. the car 1 which is driving on the road 2 and comprises a device 10 shown by Fig. 1. The device 10 can - as an alternative to the vertical acceleration sensor 16 or additionally - comprise a suspension sensor 19 which can be arranged in the area of a spring of a body work of the car 1. The suspension sensor 19 can sense temporal changes of length respectively compression of the spring of the body work.

In the shown example according to Fig. 1 the car 1 is driving on the first part 7 of the road 2, wherein almost no or just marginal vibrations will be exposed to the wheels 6. As a result, there probably will be no or just a small suspension of the springs because the springs do not have to compensate for a shock but just have to compensate for marginal vibrations. The suspension sensor 19 senses this. An accordingly suspension profile can e.g. have the form of that indicated with a1 in Fig. 3. Further, a microphone 14, e.g. the microphone 14 of the device 10 as per Fig. 1, records almost uniform sounds with only small peaks. Also, a camera 12, e.g. the camera 12 of the device as per Fig. 1, detects the condition of the road 2 on which the car 1 is driving, in this example that the road 2 is dry and not coated with ice or something else. Respective camera data is used as an input for a first environmental model EM1. Additional input data for the first environmental model can come from an optional ADAS radar sensor 20 and/or a LIDAR sensor 21 which especially can detect objects in the environment 11 of the car 1.

The first environmental model EM1 and data from the microphone 14 and the suspension sensor 19 serve as inputs for creating a second enhanced environmental model EM2 with fusion and hearing. This second enhanced environmental model EM2 includes inter alia the type of the road (determined on the basis of the sensed sounds and suspensions) and the first environmental model EM1 which includes the condition of the road (detected by the camera 12). For example, the second enhanced environmental model EM2 includes the information that the vehicle is driving on an asphalt road with an almost plane road surface. Additionally, the second environmental model EM2 can be based on a detection of road boundaries.

If the car 1 shown by Fig. 1 is driving on the second part 8 of the road 2 shocks are exposed to the wheels 6, e.g. while the wheels 6 are rolling into the potholes 9 and while the wheels 6 are rolling out of the potholes 9 again. As a result, the springs will be compressed and decompressed respectively there will be a suspension of the springs because the springs have to compensate for the shock. The suspension sensor 19 senses this. An accordingly suspension profile can e.g. have the form of that indicated with a2 in Fig. 3. Further, the microphone 14 records noise peaks (an exemplary sound profile is indicated by a3 in Fig. 3) while the wheels 6 are rolling into the potholes 9 and while the wheels 6 are rolling out of the potholes 9 again. Also, the camera 12 detects the condition of the road 2 on which the car 1 is driving, in this example that the road 2 is dry and not coated with ice or something else. In this situation, the second enhanced environmental model EM2 includes the information that the car 1 is driving on an asphalt road which is comprising potholes 9. The second enhanced environmental model EM2 servers as an input for an ADAS of the car 1. In this situation ("car 1 is driving on an asphalt road which is comprising potholes 9") the ADAS automatically reduces the speed of the car 1. Thus, the determined type of the road 2 supports a safety, comfort respectively an interior function in an ADAS.

### Reference Signs

- 1: car
- 2: road
- 3: upper layer of the road
- 4: road surface
- 5: tyre
- 6: wheel
- 7: first part of the road
- 8: second part of the road
- 9: pothole
- 10: device
- 11: environment of the car
- 12: camera
- 13: windshield
- 14: microphone
- 15: control unit
- 16: vertical acceleration sensor
- 17: chassis
- 18: database
- 19: suspension sensor
- 20: radar sensor
- 21: LIDAR sensor

## Claims

1. Method for determining a type of the road (2) on which a vehicle (1) is driving, the method comprising the steps of:
- sensing a sound of a wheel (6) of the vehicle (1) which is rolling on the road (2) by means of a microphone (14) and
- sensing a vertical acceleration of the vehicle (1) by means of a vertical acceleration sensor (16) or sensing a suspension of the vehicle (1) by means of a suspension sensor (19) and
- determining the type of the road (2) on the basis of the sensed sound and the sensed acceleration or the sensed suspension, wherein the type of the road includes the type of the road surface or the type of an uppermost layer of the road, namely gravel, asphalt, rough tarmac, concrete, cobblestones, sand or other noisy materials, and the quality of the road surface, namely clear, neat, bumpy, badly repaired or completely damaged, comprising potholes or an uneven road surface.

2. Method for creating an environmental (11) model of a vehicle (1) which is driving on a road (2), the method comprising the steps of:
- determining the type of the road (2) by means of the method according to claim 1,
- detecting fused objects in the environment (11) of the vehicle (1) and a condition of the road (2) on which the vehicle (1) is driving by means of a camera (12), a radar (20) sensor and/or a laser sensor (21), and
- creating the environmental model by means of the detected fused objects, condition of the road (2) and type of the road (2) .

3. Method according to claim 2, wherein the creation of the environmental model is additionally based on a detection of road boundaries.

4. Method according to claim 2 or 3, wherein the determined type of the road (2) supports a safety function in an Advanced Driver Assistance System (ADAS).

5. Method according to one of the preceding claims, wherein the determined type of the road (2) supports a comfort or interior function in an Advanced Driver Assistance System (ADAS).

6. Method according to one of the preceding claims, wherein the determined type of the road (2) is used in an Advanced Driver Assistance System (ADAS), wherein the ADAS controls the speed of the vehicle (1) depending on the detected type of the road (2).

7. Device (10) for determining a type of the road (2) on which a vehicle (1) is driving, the device (10) comprising
- a microphone (14) for sensing a sound of a wheel (5) of the vehicle (1) rolling on the road (2) and
- a vertical acceleration sensor (16) for sensing a vertical acceleration of the vehicle (1) or a suspension sensor (19) for sensing a suspension of the vehicle (1), wherein the device (10) is adapted for determining the type of the road (2) on the basis of the sensed sound and the sensed acceleration or the sensed suspension, wherein the type of the road includes the type of the road surface or the type of an uppermost layer of the road, namely gravel, asphalt, rough tarmac, concrete, cobblestones, sand or other noisy materials, and the quality of the road surface, namely clear, neat, bumpy, badly repaired or completely damaged, comprising potholes or an uneven road surface.

8. Device (10) according to claim 7, wherein the device (10) is adapted for creating an environmental model of a vehicle (1) which is driving on a road (2), the device (10) further comprising a camera (12), a radar sensor (20) and/or a laser sensor (21) for detecting fused objects in the environment (11) of the vehicle (1) and a condition of the road (2) on which the vehicle (1) is driving,
wherein the device (10) is adapted for creating the environmental model by means of the detected fused objects, condition of the road (2) and type of the road (2).

## Patentansprüche

1. Verfahren zur Bestimmung einer Art der Straße (2), auf der ein Fahrzeug (1) fährt, wobei das Verfahren die folgenden Schritte umfasst:
- Sensieren eines Klanges eines Rades (6) des Fahrzeuges (1), das auf der Straße (2) rollt, mittels eines Mikrofones (14) und
- Sensieren einer Vertikalbeschleunigung des Fahrzeuges (1) mittels eines Vertikalbeschleunigungssensors (16) oder Sensieren einer Abfederung des Fahrzeuges (1) mittels eines Abfederungssensors (19) und
- Bestimmen der Art der Straße (2) auf der Grundlage des sensierten Klanges und der sensierten Beschleunigung oder der sensierten Abfederung, wobei die Art der Straße einschließt: die Art der Straßenoberfläche oder die Art einer obersten Schicht der Straße, nämlich Kies, Asphalt, holperiger Schotter, Beton, Kopfsteinpflaster, Sand oder andere lärmintensive Materialien, und die Qualität der Straßenoberfläche, nämlich ohne Unebenheiten, gepflegt, holperig, mangelhaft instand gesetzt oder völlig schadhaft, umfassend Schlaglöcher oder eine unebene Straßenoberfläche.

2. Verfahren zur Erstellung eines Modelles der Umgebung (11) eines Fahrzeuges (1), das auf einer Straße (2) fährt, wobei das Verfahren die folgenden Schritte umfasst:
- Bestimmen der Art der Straße (2) mittels des Verfahrens nach Anspruch 1,
- Erfassen von fusionierten Objekten in der Umgebung (11) des Fahrzeuges (1) und eines Zustandes der Straße (2), auf der das Fahrzeug (1) fährt, mittels einer Kamera (12), eines Radarsensors (20) und/oder eines Lasersensors (21) und
- Erstellen des Umgebungsmodelles mittels der/des erfassten fusionierten Objekte, Zustandes der Straße (2) und Art der Straße (2).

3. Verfahren nach Anspruch 2, wobei die Erstellung des Umgebungsmodelles zusätzlich auf einer Erfassung von Straßenbegrenzungen basiert.

4. Verfahren nach Anspruch 2 oder 3, wobei die bestimmte Art der Straße (2) eine Sicherheitsfunktion in einem Fahrerassistenzsystem (ADAS) unterstützt.

5. Verfahren nach einem der vorangehenden Ansprüche, wobei die bestimmte Art der Straße (2) eine Komfort- oder Innenraumfunktion in einem Fahrerassistenzsystem (ADAS) unterstützt.

6. Verfahren nach einem der vorangehenden Ansprüche, wobei die bestimmte Art der Straße (2) in einem Fahrerassistenzsystem (ADAS) verwendet wird, wobei das ADAS die Geschwindigkeit des Fahrzeuges (1) in Abhängigkeit von der erfassten Art der Straße (2) regelt.

7. Vorrichtung (10) zur Bestimmung einer Art der Straße (2), auf der ein Fahrzeug (1) fährt, wobei die Vorrichtung (10) umfasst:
- ein Mikrofon (14) zum Sensieren eines Klanges eines Rades (5) des Fahrzeuges (1), das auf der Straße (2) rollt, und
- einen Vertikalbeschleunigungssensor (16) zum Sensieren einer Vertikalbeschleunigung des Fahrzeuges (1) oder einen Abfederungssensor (19) zum Sensieren einer Abfederung des Fahrzeuges (1), wobei die Vorrichtung (10) für das Bestimmen der Art der Straße (2) auf der Grundlage des sensierten Klanges und der sensierten Beschleunigung oder der sensierten Abfederung angepasst ist, wobei die Art der Straße einschließt: die Art der Straßenoberfläche oder die Art einer obersten Schicht der Straße, nämlich Kies, Asphalt, holperiger Schotter, Beton, Kopfsteinpflaster, Sand oder andere lärmintensive Materialien, und die Qualität der Straßenoberfläche, nämlich ohne Unebenheiten, gepflegt, holperig, mangelhaft instand gesetzt oder völlig schadhaft, umfassend Schlaglöcher oder eine unebene Straßenoberfläche.

8. Vorrichtung (10) nach Anspruch 7, wobei die Vorrichtung (10) für das Erstellen eines Umgebungsmodelles eines Fahrzeuges (1), das auf einer Straße (2) fährt, angepasst ist, wobei die Vorrichtung (10) ferner eine Kamera (12), einen Radarsensor (20) und/oder einen Lasersensor (21) zum Erfassen von fusionierten Objekten in der Umgebung (11) des Fahrzeuges (1) und eines Zustandes der Straße (2), auf der das Fahrzeug (1) fährt, umfasst,
wobei die Vorrichtung (10) für das Erstellen des Umgebungsmodelles mittels der/des erfassten fusionierten Objekte, Zustandes der Straße (2) und Art der Straße (2) angepasst ist.

## Revendications

1. Procédé de détermination d'un type de route (2) sur laquelle circule un véhicule (1), ledit procédé comprenant les étapes suivantes :
- détection du son d'une roue (6) du véhicule (1) circulant sur la route (2) au moyen d'un microphone (14) et détection d'une accélération verticale du véhicule (1) au moyen d'un capteur d'accélération verticale (16), ou détection d'une suspension du véhicule (1) au moyen d'un capteur de suspension (19), et
- détermination du type de route (2) sur la base du son détecté et de l'accélération détectée ou de la suspension détectée, le type de route comprenant le type de surface de route ou le type de couche supérieure de la route, en l'occurrence gravier, asphalte, bitume brut, béton, pavés, sable ou autres matériaux bruyants, et la qualité de surface de la route, en l'occurrence dégagée, propre, cahoteuse, mal entretenue ou complètement abîmée, avec des nids de poule ou une surface de route inégale.

2. Procédé de création d'un modèle environnemental (11) d'un véhicule (1) circulant sur une route (2), ledit procédé comprenant les étapes suivantes :
- détermination du type de route (2) au moyen du procédé selon la revendication 1,
- détection d'objets fondus dans l'environnement (11) du véhicule (1) et d'un état de la route (2) sur laquelle circule le véhicule (1) au moyen d'une caméra (12), d'un capteur radar (20) et/ou d'un capteur laser (21), et
- création du modèle environnemental au moyen des objets fondus, de l'état de route (2) et du type de route (2) détectés.

3. Procédé selon la revendication 2, où la création du modèle environnemental est en outre basée sur une détection des limites de route.

4. Procédé selon la revendication 2 ou la revendication 3, où le type de route (2) déterminé assiste une fonction de sécurité dans un système avancé d'aide à la conduite (ADAS).

5. Procédé selon l'une des revendications précédentes, où le type de route (2) déterminé assiste une fonction de confort ou intérieure dans un système avancé d'aide à la conduite (ADAS).

6. Procédé selon l'une des revendications précédentes, où le type de route (2) déterminé est utilisé dans un système avancé d'aide à la conduite (ADAS), ledit ADAS commandant la vitesse du véhicule (1) en fonction du type de route (2) détecté.

7. Dispositif (10) pour la détermination d'un type de route (2) sur laquelle un véhicule (1) circule, ledit dispositif (10) comprenant - un microphone (14) destiné à détecter un son d'une roue (5) du véhicule (1) circulant sur la route (2) et
- un capteur d'accélération verticale (16) destiné à détecter une accélération verticale du véhicule (1), ou un capteur de suspension (19) destiné à détecter une suspension du véhicule (1), ledit dispositif (10) étant prévu pour déterminer le type de route (2) sur la base du son détecté et de l'accélération détectée ou de la suspension détectée, le type de route comprenant le type de surface de route ou le type de couche supérieure de la route, en l'occurrence gravier, asphalte, bitume brut, béton, pavés, sable ou autres matériaux bruyants, et la qualité de surface de la route, en l'occurrence dégagée, propre, cahoteuse, mal entretenue ou complètement abîmée, avec des nids de poule ou une surface de route inégale.

8. Dispositif (10) selon la revendication 7, où le dispositif (10) est prévu pour créer un modèle environnemental d'un véhicule (1) circulant sur une route (2), ledit dispositif (10) comprenant en outre une caméra (12), un capteur radar (20) et/ou un capteur laser (21) destinés à détecter des objets fondus dans l'environnement (11) du véhicule (1) et un état de la route (2) sur laquelle circule le véhicule (1),
ledit dispositif (10) étant prévu pour créer le modèle environnemental au moyen des objets fondus, de l'état de route (2) et du type de route (2) détectés.
